# EUROPEAN PATENT SPECIFICATION

(11) **EP 0 683 076 B1**
(45) Date of publication and mention of the grant of the patent: **13.08.1997**
(21) Application number: 95107056.4
(22) Date of filing: 10.05.1995
(51) Int. Cl.: B60S 1/16, B60S 1/24

(54) **A windshield wiper driving mechanism**
Scheibenwischer-Antriebsmechanismus
Mécanisme d'entraînement d'essuie-glace

(30) Priority: 17.05.1994 IT TO940107 U
(43) Date of publication of application: 22.11.1995
(73) Proprietor: FIAT AUTO S.p.A., 10135 Torino (IT)
(72) Inventor: Garibaldi, Fabio, I-10091 Alpignano, Torino (IT)
(74) Representative: Di Francesco, Gianni

(56) References cited:
- DE-A- 2 330 096
- FR-A- 2 149 084
- FR-A- 2 193 371
- US-A- 3 851 351

## Description

The present invention refers to an automobile windshield wiper driving mechanism, of the type comprising an electric motor having a worm screw obtained on the rotor shaft coupled to a helical toothed gear, rotary motion of the helical toothed gear being transformed in reciprocating motion of one or more windshield wiper blades through crank mechanisms. Such windshield wiper driving mechanisms are generally known from the state of the art, e.g. from the document FR-A-2 149 084. Among windshield wipers making use of only one blade to wipe the whole windshield, particularly with utility cars, there are known driving mechanisms having a single body enclosing the electric motor and relevant driving devices and crank mechanisms for transforming rotary motion into reciprocating motion. A single reciprocating rotary shaft comes out of the single body and is connected directly to the wiper blade arm without interposing further mechanisms which would increase bulk and cause difficulties in mounting the driving mechanism on the vehicle. Most common windshield wipers, i.e. those having two blades, have more complex driving mechanisms as two blade arms are to be moved in unison. The mechanisms of this kind of windshield wiper, the design of which is less recent, provide two equal crank mechanisms for transforming rotary motion in reciprocating motion. The crank mechanisms are series connected to the toothed gear of the electric motor. The pins on which the blade arms rotate are supported by single brackets fixed to the bodywork of the vehicle.

Most recent kinds of two blade windshield wipers make use of a central bracket member supporting the electric motor and the toothed gear coupled to a driving pin. The central bracket member also provides a rest for a cross member having ends bearing the pins about which the blade arms rotate. A double crank mechanism connects the two side pins to the central one so as to transform rotary motion into reciprocating motion.

If, on one hand, the first solution has the advantage of being light overall, there are however some drawbacks. Failure of parts before the mechanism will stop the entire windshield wiper, as the driving is transmitted in series. On the other hand, operation of the second blade is likely to worsen with time as clearances of the first mechanism add to those of the second one.

The second, more recent solution is free of problems concerning operation clearances as the motor in the centre. However, bulk and weight problems are encountered for the presence of the central bearing and the cross member.

It is an object of the present invention to provide a driving mechanism for a windshield wiper having at least two blades, capable of overcoming the above prior art drawbacks.

To this end, a windshield wiper driving mechanism in accordance with the present invention is characterized by the features specified in the characterizing part of claim 1.

Further characteristics and advantages will be apparent from the ensuing description, given by way of example and referring to the accompanying drawings, in which:
- FIG. 1: is a schematic front view of a windshield wiper driving mechanism according to the present invention;
- FIG. 2: is a top schematic view of the mechanism of FIG. 1; and
- FIG. 3: is a schematic front view of an alternative embodiment of the windshield wiper driving mechanism according to the present invention.

With reference initially to the drawings, numeral 1 designates a mechanism for driving the windshield wiper blades 2 and 3 of an automobile.

The mechanism is composed of a body 5 for housing and supporting an electric motor 6 having a worm screw 7 mounted to the rotor shaft. Worm screw 7 is coupled to a helical toothed gear 8 for rotation speed reduction purposes. A first link rod 11 is pivotally mounted to helical toothed gear 8 at 10 in an off-centre position. Link rod 11 is pivotally connected to a second link rod 12 rotatably coupled to a first pin 13 extending from body 5 and rotatably supported thereon. Body 5 is fitted with fasteners 14 for fitting to the vehicle. Arm 15 of the first windshield wiper blade 2 inserts on said pin 13.

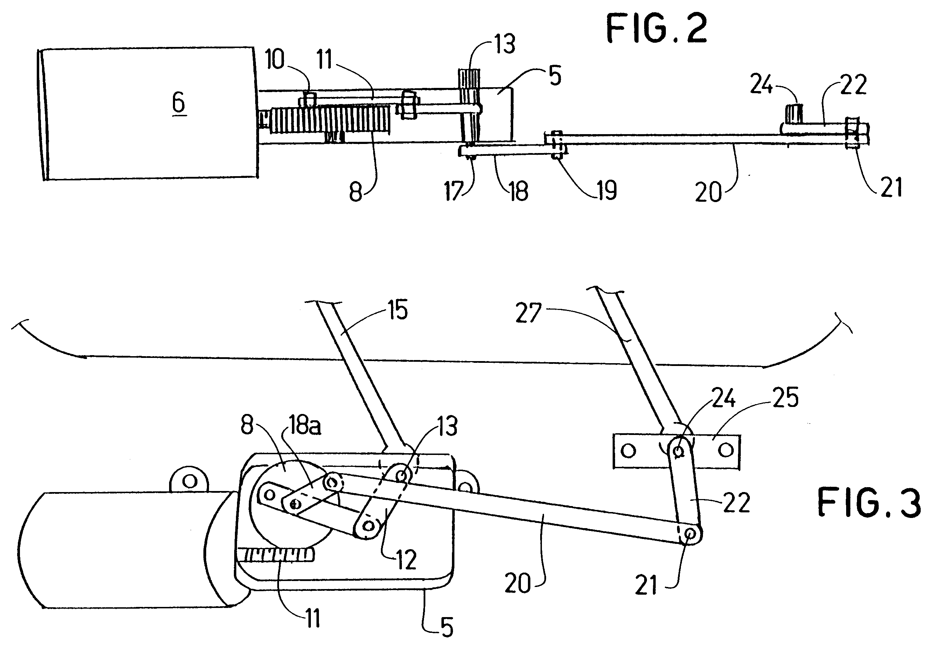

Coaxial to and integral with pin 13 is a second pin 17 (FIG. 2) extending from body 5 in the diametrically opposite direction of the first pin 13. Second pin 17 is pivotally connected to a third link rod 18 external to body 5 and disposed parallel thereto. Third link rod 18 is rotatably mounted at 19 to a transmission rod 20. Transmission rod 20 is rotatably mounted at 21 to a fourth link rod 22, which is in turn secured for rotation to a second pin 24.

The second arm 27 of the second windshield wiper blade 3 is inserted on second pin 24, which is rotatably supported by a bracket member 25 fixable to the vehicle bodywork.

The second embodiment illustrated in FIG. 3 differs from the first only in that a third link rod 18a is pivotally mounted to the axle of helical toothed gear 8 instead of the first pin 13.

As apparent, operation of the mechanism is the following.

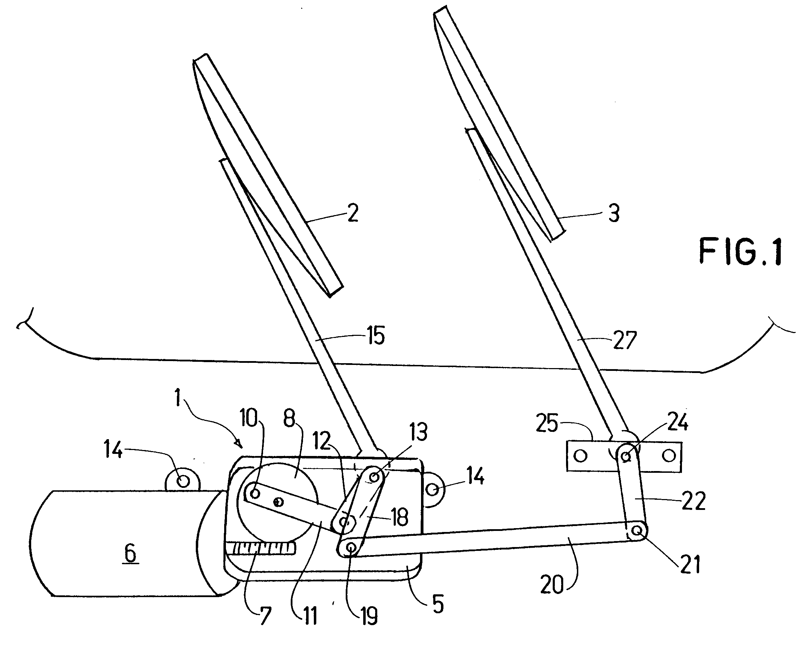

Referring to FIGS. 1 and 2, rotary motion transmitted to the helical toothed gear 8 by the motor 6 is transformed in reciprocating motion by link rod 11 and link rod 12 and transmitted to pin 13 driving the windshield wiper blade 2 through arm 15. Simultaneously, reciprocating motion of pin 13 is transmitted to pin 24 by link rods 18 and 22, pivotally connected to the first pin 13 and the second pin 24, respectively, and the transmission rod 20. As a consequence, windshield wiper blade 3 is driven by arm 27 in unison with windshield wiper blade 2.

With reference to the second embodiment (FIG. 3), as the link rod 18 is pivotally connected to the axle of helical toothed gear 8, link rod 18 works as a crank, with rod 20 acting as a connecting rod for transforming rotary motion in reciprocating motion. The only inconvenience is the need to have more space available around the axle of helical toothed gear 8 out of body 5.

Further, without departing from the scope of the invention, a body 5 having greater overall dimensions can be provided adapted to accommodate also part of the crank mechanism driving the second windshield wiper blade 3, i.e. the link rod 18 or 18a, according to whether the first or second embodiment is preferred Obviously, a slot will be provided in the body 5 to let the rod 20 out.

From the foregoing it will be seen that on one side the mechanism of the invention, being less complex and bulky, overcomes the drawbacks of most recent solutions by eliminating the supporting cross member and the second transmission rod. On the other hand, also those problems of the first solutions are solved as the overall slack of the various components is taken up. This advantage is obviously limited to the second embodiment only.

## Claims

1. A windshield wiper driving mechanism, of the type comprising an electric motor (6) having a worn screw (7) obtained on the rotor shaft coupled to a helical toothed gear (8), rotary motion of said helical toothed gear being transformed in reciprocating motion of a plurality of windshield wiper blades (2, 3) through crank mechanisms (7, 8, 11, 12, 13),
characterised in that
-- the electric motor (6) and the corresponding driving devices and crank mechanisms (7, 8, 11, 12, 13) for transforming the motion of at least one windshield wiper blade (2) from rotary into reciprocating motion are contained within a single body (5) fitted with means (14) for fastening said body (5)to the vehicle, and
-- the crank mechanisms (18, 18a, 20, 22, 24) for driving at least a second windshield wiper blade (3) are external to said body (5) and connected to the crank mechanisms (13, 8) of the first windshield wiper blade (2).

2. A driving mechanism as claimed in claim 1, characterised in that the crank mechanisms for driving the second windshield wiper blade (3) are composed of a link rod (18) secured for rotation with the driving pin (13) of said first windshield wiper blade (2), a transmission rod (20) and another link rod (22) secured for rotation with a driving pin (24) of said second windshield wiper blade (3).

3. A driving mechanism as claimed in claim 2, characterised in that a link rod (18a) of the crank mechanism for driving the second windshield wiper blade (3) is connected to said transmission rod (20) and secured for rotation with the axle of said toothed gear (8).

4. A driving mechanism as claimed in claim 3, characterised in that said link rod (18a) of the crank mechanism for driving the second windshield wiper blade (3), secured for rotation with the axle of said toothed gear (8), is contained within the driving mechanism body (5).

5. A driving mechanism as claimed in claims 3 or 4, characterised in that said body (5) of the driving mechanism is provided with a slot for letting out said transmission rod (20) for driving the second windshield wiper blade (3).

## Patentansprüche

1. Scheibenwischer-Antriebsmechanismus umfassend einen Elektromotor (6) mit einer auf der Ankerwelle angeordneten Schnecke (7), die mit einem schraubenförmigen Zahnrad (8) kämmt, wobei die Drehbewegung des schraubenförmigen Zahnrades durch Kurbelgetriebe (7, 8, 11, 12, 13) umgewandelt wird in eine Hin- und Herbewegung einer Vielzahl von Scheibenwischblättern (2, 3),
dadurch gekennzeichnet,
daß der Elektromotor (6) und die entsprechenden Antriebsvorrichtungen und Kurbelgetriebe (7, 8, 11, 12, 13) zur Umwandlung der Bewegung wenigstens eines Scheibenwischblattes (2) von einer Drehbewegung in eine Hin- und Herbewegung innerhalb eines einzigen Körpers (5) enthalten sind, der mit Mitteln (14) zum Befestigen des Körpers (5) an dem Fahrzeug ausgestattet ist, und
daß die Kurbelgetriebe (18, 18a, 20, 22, 24) zum Antrieb wenigstens eines zweiten Scheibenwischblattes (3) außerhalb des Körpers (5) angebracht und mit den Kurbelgetrieben (13, 8) des ersten Scheibenwischblattes (2) verbunden sind.

2. Antriebsmechanismus nach Anspruch 1,
dadurch gekennzeichnet,
daß die Kurbelgetriebe zum Antrieb des zweiten Scheibenwischblattes (3) aus einer Verbindungsstange (18), die zur Drehung an dem Mitnehmerstift (13) des ersten Scheibenwischblattes (2) befestigt ist, einer Übertragungsstange (20) und einer weiteren Verbindungsstange (22), die zur Drehung an einem Mitnehmerstift (24) des zweiten Scheibenwischblattes (3) befestigt ist, bestehen.

3. Antriebsmechanismus nach Anspruch 2,
dadurch gekennzeichnet,
daß eine Verbindungsstange (18a) des Kurbelgetriebes zum Antrieb des zweiten Scheibenwischblattes (3) mit der Übertragungsstange (20) verbunden und zur Drehung an der Achse des Zahnrades (8) befestigt ist.

4. Antriebsmechanismus nach Anspruch 3,
dadurch gekennzeichnet,
daß die Verbindungsstange (18a) des Kurbelgetriebes zum Antrieb des zweiten Scheibenwischblattes (3), die zur Drehung an der Achse des Zahnrades (8) befestigt ist, innerhalb des Antriebsmechanismuskörpers (5) enthalten ist.

5. Antriebsmechanismus nach Anspruch 3 oder 4,
dadurch gekennzeichnet,
daß der Körper (5) des Antriebsmechanismus mit einem Schlitz zum Herauslassen der Übertragungsstange (20) zum Antrieb des zweiten Scheibenwischblattes (3) ausgestattet ist.

## Revendications

1. Mécanisme d'entraînement d'un essuie-glace, du type comprenant un moteur électrique (6) ayant une vis sans fin (7) ménagée sur l'arbre du rotor couplé à une roue à denture hélicoïdale (8), un mouvement rotatif de ladite roue à denture hélicoïdale étant transformé en un mouvement alternatif d'une pluralité de balais d'essuie-glace (2, 3) au moyen de mécanismes à manivelle (7, 8, 11, 12, 13),
caractérisé en ce que
- le moteur électrique (6) et les dispositifs d'entraînement et mécanismes à manivelle correspondants (7, 8, 11, 12, 13) pour transformer un mouvement de rotation en mouvement alternatif d'au moins un balai d'essuie-glace (2) sont contenus dans un corps (5) unique muni de moyens (14) pour fixer ledit corps (5) au véhicule, et
- les mécanismes à manivelle (18, 18a, 20, 22, 24) pour entraîner au moins un deuxième balai d'essuie-glace (3) sont externes audit corps (5) et sont reliés aux mécanismes à manivelle (13, 8) du premier balai d'essuie-glace (2).

2. Mécanisme d'entraînement selon la revendication 1, caractérisé en ce que les mécanismes à manivelle pour entraîner le deuxième balai d'essuie-glace (3) sont composés d'une biellette articulée (18) solidaire en rotation de l'axe d'entraînement (13) dudit premier balai d'essuie-glace (2), d'une tringle de transmission (20) et d'une autre biellette articulée (22) solidaire en rotation de l'axe d'entraînement (24) dudit deuxième balai d'essuie-glace (3).

3. Mécanisme d'entraînement selon la revendication 2, caractérisé en ce qu'une biellette articulée (18a) du mécanisme à manivelle pour entraîner le deuxième balai d'essuie-glace (3) est reliée à ladite tringle de transmission (20) et est solidaire en rotation de l'axe de ladite roue à denture (8).

4. Mécanisme d'entraînement selon la revendication 3, caractérisé en ce que ladite biellette articulée (18a) du mécanisme à manivelle pour entraîner le deuxième balai d'essuie-glace (3), solidaire en rotation de l'axe de ladite roue à denture (8), est contenue dans le corps (5) du mécanisme d'entraînement.

5. Mécanisme d'entraînement selon la revendication 3 ou la revendication 4, caractérisé en ce que ledit corps (5) du mécanisme d'entraînement est muni d'une fente afin de permettre le passage de la tringle de transmission (20) pour entraîner le deuxième balai d'essuie-glace (3).
